# EUROPÄISCHE PATENTANMELDUNG

(11) **EP 3 808 825 A1**
(43) Veröffentlichungstag der Anmeldung: **21.04.2021**
(21) Anmeldenummer: 20199763.2
(22) Anmeldetag: 02.10.2020
(51) Int. Cl.: C09D 11/101, C09D 11/107, C09D 4/00, C09D 4/06

(54) **UV-HÄRTBARE ZUSAMMENSETZUNG ZUM BESCHICHTEN ODER BEDRUCKEN EINES SUBSTRATS UND/ODER EINER SUBSTRATOBERFLÄCHE**

(30) Priorität: 07.10.2019 DE 102019215331
(71) Anmelder: Marabu GmbH & Co. KG, 71732 Tamm (DE)
(72) Erfinder: Böhringer, Oliver, 71364 Winnenden (DE); Rupp, Jochen, 71732 Tamm (DE)
(74) Vertreter: Patentanwälte Ruff, Wilhelm, Beier, Dauster & Partner mbB

(57) **Zusammenfassung**

Die Erfindung betrifft eine UV-härtbare Zusammensetzung zum Beschichten oder Bedrucken, insbesondere Digitalbedrucken, eines Substrats und/oder einer Substratoberfläche, aufweisend
- ein monofunktionelles Acrylatmonomer/Methacrylatmonomer mit einem substituierten oder unsubstituierten monocycloaliphatischen Kohlenwasserstoffrest,
- wenigstens ein Vinylmonomer mit einem substituierten oder unsubstituierten heterocyclischen Rest, wobei der heterocyclische Rest wenigstens ein ringbildendes Stickstoffatom aufweist, - wenigstens ein monofunktionelles Acrylatmonomer/Methacrylatmonomer mit einem substituierten oder unsubstituierten bicyclischen, nichtaromatischen Kohlenwasserstoffrest und
- wenigstens einen Photoinitiator,

wobei die UV-härtbare Zusammensetzung frei von wenigstens einem monofunktionellen Acrylatmonomer/Methacrylatmonomer mit einem substituierten oder unsubstituierten heterocyclischen, nichtaromatischen Rest ist.

Die Erfindung betrifft weiterhin ein Verfahren zum Beschichten und/oder Bedrucken, insbesondere Digitalbedrucken, eines Substrats und/oder einer Substratoberfläche, ein Kit sowie ein mit der UV-härtbaren Zusammensetzung beschichtetes oder bedrucktes, insbesondere digital bedrucktes, Substrat.

## Beschreibung

### ANWENDUNGSGEBIET UND STAND DER TECHNIK

Die Erfindung betrifft eine UV-härtbare Zusammensetzung zum Beschichten oder Bedrucken eines Substrats und/oder einer Substratoberfläche, ein Beschichtungs- oder Druckverfahren, ein Kit sowie ein Substrat.

Die Digitaldrucktechnologie, insbesondere die Tintenstrahldrucktechnologie, wird in zunehmendem Maße für industrielle Druckaufgaben eingesetzt. Gegenüber analogen Verfahren zeichnet sich die Digitaldrucktechnologie aufgrund des Wegfalls fester Druckformen durch eine erhöhte Flexibilität aus. Ein weiterer Vorteil besteht in der Möglichkeit, berührungslos unterschiedlich geformte Gegenstände direkt, d.h. ohne Verwendung von Etiketten oder Aufklebern, zu dekorieren.

Besonders wichtig ist die Direktdekoration von Platten aller Art, insbesondere für Werbezwecke. Zu den wesentlichen Anforderungen an eine Direktdekoration zählen eine hervorragende Resistenz der Dekoration gegenüber mechanischer Einwirkung und eine rasche Durchhärtung der Dekoration, die schnelle Produktionszyklen ermöglicht. Ein weiteres wichtiges Kriterium stellt ein möglichst breites Haftungsspektrum auf einer Vielzahl verschiedener Untergründe, insbesondere entsprechend den in der Werbetechnik zum Einsatz kommenden Plattenmaterialien, dar. Beispielhaft seien in diesem Zusammenhang Polyvinylchlorid, Polymethylmethacrylat, Polypropylen, Polyethylen, Acrylnitril-Butadien-Styrol-Copolymer und Polystyrol genannt.

Bekannte Farbformulierungen oder Tinten sollen dieses Ziel durch Verwendung großer Mengen an Photoinitiatoren erreichen. Nachteilig an diesem Ansatz ist, dass über die Photoinitiatoren große Mengen an gesundheitsschädlichen Substanzen in die Farbformulierungen bzw. Tinten eingebracht werden. Zudem steigen dadurch die Rohstoffkosten.

Weiterhin sind Tinten bekannt, bei denen die erforderliche Reaktivität durch hohe Anteile an multifunktionellen Acrylatmonomeren erreicht wird. Aus der WO 2011/135089 A1 ist beispielsweise eine UV-härtbare Tinte bekannt, welche neben Pigmenten, radikalischen Photoinitiatoren, Dispergiermitteln und gegebenenfalls weiteren Additiven wenigstens ein polyfunktionelles alkoxyliertes und/oder polyalkoxyliertes Acrylatmonomer aufweist.

Nachteilig bei Tinten mit polyfunktionalen oder multifunktionellen Acrylatmonomeren ist, dass für besonders reaktive Zusammensetzungen ein eingeschränktes Haftungsspektrum für verschiedene Untergründe typisch ist.

Eine Tintenstrahldrucker-Tinte, welche wenigstens ein monofunktionales (Meth-)AcrylatMonomer, wenigstens ein monofunktionales Monomer ausgewählt aus einem N-Vinyl-Amid, einem N-Acryloyl-Amin oder einem Gemisch derselben, wenigstens einen radikalischen Photoinitiator und wenigstens einen Farbstoff aufweist, ist aus der WO 2007/129017 A1 bekannt.

### AUFGABE UND LÖSUNG

Die Erfindung stellt sich daher die Aufgabe, eine UV-härtbare Zusammensetzung bereitzustellen, welche im Zusammenhang von konventionellen UV-härtbaren Zusammensetzungen auftretende Nachteile vermeidet und sich insbesondere beim Durchführen von Direktdekorationen durch eine sehr gute Resistenz gegenüber mechanischen Einwirkungen sowie durch eine rasche Durchhärtung der Direktdekorationen auszeichnet. Weiterhin stellt sich die Erfindung die Aufgabe, ein Beschichtungs- oder Druckverfahren, ein Kit sowie ein beschichtetes oder bedrucktes Substrat bereitzustellen.

Diese Aufgaben werden gelöst durch eine UV-härtbare Zusammensetzung mit den Merkmalen des unabhängigen Anspruchs 1, durch ein Verfahren gemäß Anspruch 13, ein Kit gemäß Anspruch 14 sowie durch ein Substrat gemäß Anspruch 15. Bevorzugte Ausgestaltungen der Erfindung sind in den abhängigen Ansprüchen sowie in der Beschreibung definiert. Der Wortlaut sämtlicher Ansprüche wird hiermit durch Bezugnahme ausdrücklich zum Inhalt der Beschreibung gemacht.

Gemäß einem ersten Aspekt betrifft die Erfindung eine UV-härtbare Zusammensetzung zum Beschichten oder Bedrucken, insbesondere Digitalbedrucken, eines Substrats und/oder einer Substratoberfläche.

Bei dem Substrat kann es sich um ein plattenförmig gestaltetes Substrat, d.h. um eine Platte, handeln.

Das Substrat kann insbesondere ein Material aufweisen oder aus einem Material bestehen, welches ausgewählt ist aus der Gruppe bestehend aus Kunststoff, Keramik und Glas. Bevorzugt handelt es sich bei dem Substrat um ein Substrat, welches einen Kunststoff aufweist oder aus einem Kunststoff besteht. Der Kunststoff ist vorzugsweise ausgewählt aus der Gruppe bestehend aus Polyvinylchlorid, Polymethylmethacrylat, Polypropylen, Polyethylen, Acrylnitril-Butadien-Styrol-Copolymer, Polystyrol, Polyamid, Copolymere von wenigstens zwei der genannten Materialien und Blends, d.h. Mischungen, von wenigstens zwei der genannten Materialien.

Die UV-härtbare Zusammensetzung weist Folgendes auf:
- wenigstens ein monofunktionelles Acrylatmonomer/Methacrylatmonomer mit einem substituierten oder unsubstituierten monocycloaliphatischen Kohlenwasserstoffrest, d.h. wenigstens ein monofunktionelles Acrylatmonomer mit einem substituierten oder unsubstituierten monocycloaliphatischen Kohlenwasserstoffrest und/oder wenigstens ein monofunktionelles Methacrylatmonomer mit einem substituierten oder unsubstituierten monocycloaliphatischen Kohlenwasserstoffrest,
- wenigstens ein Vinylmonomer mit einem substituierten oder unsubstituierten heterocyclischen Rest, wobei der heterocyclische Rest wenigstens ein ringbildendes Stickstoffatom, insbesondere nur ein ringbildendes Stickstoffatom oder mehrere ringbildende Stickstoffatome, insbesondere zwei ringbildende Stickstoffatome, aufweist,
- wenigstens ein monofunktionelles Acrylatmonomer/Methacrylatmonomer mit einem substituierten oder unsubstituierten bicyclischen, nichtaromatischen Kohlenwasserstoffrest, d.h. wenigstens ein monofunktionelles Acrylatmonomer mit einem substituierten oder unsubstituierten bicyclischen, nichtaromatischen Kohlenwasserstoffrest und/oder wenigstens ein monofunktionelles Methacrylatmonomer mit einem substituierten oder unsubstituierten bicyclischen, nichtaromatischen Kohlenwasserstoffrest, und
- wenigstens einen Photoinitiator.

Vorzugsweise ist die UV-härtbare Zusammensetzung frei von wenigstens einem monofunktionellen Acrylatmonomer/Methacrylatmonomer mit einem substituierten oder unsubstituierten heterocyclischen, nichtaromatischen Rest, insbesondere substituierten oder unsubstituierten heterocyclischen, nichtaromatischen organischen Rest, d.h. frei von wenigstens einem monofunktionellen Acrylatmonomer mit einem substituierten oder unsubstituierten heterocyclischen, nichtaromatischen Rest, insbesondere substituierten oder unsubstituierten heterocyclischen, nichtaromatischen organischen Rest, und/oder wenigstens einem monofunktionellen Methacrylatmonomer mit einem substituierten oder unsubstituierten heterocyclischen, nichtaromatischen Rest, insbesondere substituierten oder unsubstituierten heterocyclischen, nichtaromatischen organischen Rest.

Unter dem Ausdruck "monofunktionelles Acrylatmonomer" soll im Sinne der vorliegenden Erfindung ein Monomer mit lediglich einer Acrylgruppe pro Monomermolekül verstanden werden.

Unter dem Ausdruck "mulitfunktionelles Acrylatmonomer" soll im Sinne der vorliegenden Erfindung ein Monomer mit zwei oder mehr Acrylgruppen pro Monomermolekül verstanden werden.

Unter dem Ausdruck "monofunktionelles Methacrylatmonomer" soll im Sinne der vorliegenden Erfindung ein Monomer mit lediglich einer Methacrylgruppe pro Monomermolekül verstanden werden.

Unter dem Ausdruck "mulitfunktionelles Methacrylatmonomer" soll im Sinne der vorliegenden Erfindung ein Monomer mit zwei oder mehr Methacrylgruppen pro Monomermolekül verstanden werden.

Unter dem Ausdruck "monocycloaliphatischer Kohlenwasserstoffrest" soll im Sinne der vorliegenden Erfindung ein aliphatischer Kohlenwasserstoffrest, insbesondere ein Alkyl-, Alkenyl- oder Alkinylrest, verstanden werden, welcher lediglich einen einzelnen Kohlenwasserstoffring enthält oder aus nur einem einzigen Kohlenwasserstoffring besteht.

Unter dem Ausdruck "Vinylmonomer" soll im Sinne der vorliegenden Erfindung ein Monomer mit wenigstens einer Vinylgruppe, d.h. wenigstens einem Ethen-Rest (Ethylen-Rest), insbesondere nur einer Vinylgruppe, d.h. nur einem Ethen-Rest, oder mehreren Vinylgruppen, d.h. mehreren Ethen-Resten, verstanden werden.

Unter dem Ausdruck "heterocyclischer Rest, wobei der heterocyclische Rest wenigstens ein ringbildendes Stickstoffatom aufweist" soll im Sinne der vorliegenden Erfindung ein organischer Rest verstanden werden, welcher einen Ring oder mehrere Ringe aufweist oder aus einem Ring oder mehreren Ringen besteht, wobei der Ring bzw. die Ringe neben ringbildenden Kohlenstoffatomen wenigstens ein ringbildendes Stickstoffatom, d.h. wenigstens ein Stickstoffatom als Ringglied, aufweist bzw. aufweisen. Insbesondere kann der Ring bzw. können die Ringe nur ein Stickstoffatom als Ringglied oder mehrere, insbesondere zwei, Stickstoffatome als Ringglieder aufweisen.

Unter dem Ausdruck "N-Vinylmonomer" soll im Sinne der vorliegenden Erfindung ein Monomer mit einer Vinylgruppe verstanden werden, wobei die Vinylgruppe an einem Stickstoffatom, vorzugsweise an einem Stickstoffatom eines heterocyclischen Rests, des Monomers kovalent gebunden ist.

Unter dem Ausdruck "heterocyclischer, nichtaromatischer organischer Rest" soll im Sinne der vorliegenden Erfindung ein nichtaromatischer organischer Rest verstanden werden, welcher einen Ring oder mehrere Ringe enthält oder aus einem Ring oder mehreren Ringen besteht, wobei der Ring bzw. die Ringe neben ringbildenden Kohlenstoffatomen wenigstens ein ringbildendes Heteroatom, insbesondere zwei ringbildende Heteroatome, wie beispielsweise ein Sauerstoffatom und/oder ein Stickstoffatom oder zwei Sauerstoffatome, enthält bzw. enthalten.

Unter dem Ausdruck "bicyclischer, nichtaromatischer Kohlenwasserstoffrest" soll im Sinne der vorliegenden Erfindung ein aliphatischer Kohlenwasserstoffrest, insbesondere ein Alkyl-, Alkenyl- oder Alkinylrest, verstanden werden, welcher zwei verknüpfte Kohlenwasserstoffringe enthält oder aus zwei verknüpften Kohlenwasserstoffringen besteht. Je nach Art der Verknüpfung der Ringe kann es sich bei dem bicyclischen, nichtaromatischen Kohlenwasserstoffrest um einen anelliert bicyclischen Kohlenwasserstoffrest, einen spirocyclischen Kohlenwasserstoffrest oder um einen verbrückt bicyclischen Kohlenwasserstoffrest handeln. Bevorzugt handelt es sich bei dem bicyclischen, nichtaromatischen Kohlenwasserstoffrest um einen verbrückt bicyclischen Kohlenwasserstoffrest.

Unter dem Ausdruck "UV-härtbare Zusammensetzung" soll im Sinne der vorliegenden Erfindung eine Zusammensetzung verstanden werden, welche unter der Einwirkung von ultravioletter Strahlung (UV-Strahlung) teilweise oder vollständig ausgehärtet werden kann.

Unter dem Ausdruck "ultraviolette Strahlung (UV-Strahlung)" soll im Sinne der vorliegenden Erfindung eine Strahlung in einem Wellenlängenbereich von 100 nm bis 450 nm, insbesondere 100 nm bis 420 nm, verstanden werden.

Überraschenderweise hat sich gezeigt, dass sich eine Zusammensetzung mit den vorstehend beschriebenen und im Folgenden noch eingehender erläuterten Typen von Monomeren in besonderer Weise als UV-härtbare Zusammensetzung zum Beschichten oder Bedrucken, insbesondere Digitalbedrucken, von Substraten und/oder Substratoberflächen eignet. Dabei zeichnet sich die erfindungsgemäße Zusammensetzung vorteilhafterweise durch eine ausgezeichnete Reaktivität sowie insbesondere eine schnelle Durchhärtung, ein ausreichendes Haftungsvermögen auf einer Vielzahl von Substraten und/oder Substratoberflächen, eine reduzierte Blockfestigkeit, d.h. eine geringere Verklebungsneigung beim Stapeln, Zusammenfügen oder Aufwickeln zweier oder mehrerer beschichteter oder bedruckter, insbesondere digitalbedruckter, Substrate, insbesondere bei erhöhtem Druck und/oder erhöhter Temperatur, sowie - im UV-gehärteten Zustand - durch mechanische Robustheit und insbesondere Wetterfestigkeit aus.

Ein weiterer Vorteil besteht darin, dass die erfindungsgemäße Zusammensetzung gegenüber konventionellen UV-härtbaren Zusammensetzungen geringere Mengen an einem Photoinitiator aufweisen kann. Dadurch lassen sich mit besonderem Vorteil Gesundheitsrisiken und insbesondere Herstellungskosten senken.

In Ausgestaltung der Erfindung handelt es sich bei dem substituierten oder unsubstituierten monocycloaliphatischen Kohlenwasserstoffrest um einen Monocycloalkylrest, insbesondere mit 3 ringbildenden Kohlenstoffatomen bis 8 ringbildenden Kohlenstoffatomen, bevorzugt 5 ringbildenden Kohlenstoffatomen oder 6 ringbildenden Kohlenstoffatomen.

In weiterer Ausgestaltung der Erfindung ist das wenigstens eine monofunktionelle Acrylatmonomer/Methacrylatmonomer mit einem substituierten oder unsubstituierten monocycloaliphatischen Kohlenwasserstoffrest ausgewählt aus der Gruppe bestehend aus 3,3,5-Trimethylcyclohexylacrylat, 2-(1,1-Dimethylethyl)cyclohexylacrylat, 3-(1,1-Dimethylethyl)cyclohexylacrylat, 4-(1,1-Dimethylethyl)cyclohexylacrylat, 4-tert.-Butyl-cyclohexylacrylat, 4-tert.-Butylcyclohexylmethacrylat, Cyclohexylmethacrylat, 3,3,5-Trimethylcyclohexylmethacrylat und Mischungen von wenigstens zwei der genannten monofunktionellen Acrylatmonomere/Methacrylatmonomere.

Vorzugsweise handelt es sich bei dem wenigstens einen monofunktionellen Acrylatmonomer mit einem substituierten oder unsubstituierten monocycloaliphatischen Kohlenwasserstoffrest um 4-tert.-Butylcyclohexylacrylat und/oder bei dem wenigstens einen monofunktionellen Methacrylatmonomer mit einem substituierten oder unsubstituierten monocycloaliphatischen Kohlenwasserstoffrest um 3,3,5-Trimethylcyclohexylacrylat.

In weiterer Ausgestaltung der Erfindung weist das wenigstens eine monofunktionelle Acrylatmonomer/Methacrylatmonomer mit einem substituierten oder unsubstituierten monocycloaliphatischen Kohlenwasserstoffrest einen Anteil von 5 Gew.-% bis 35 Gew.-%, insbesondere 5 Gew.-% bis 30 Gew.-%, insbesondere 10 Gew.-% bis 25 Gew.-%, vorzugsweise 15 Gew.-% bis 25 Gew.-%, auf, bezogen auf das Gesamtgewicht der Zusammensetzung.

In weiterer Ausgestaltung der Erfindung ist die UV-härtbare Zusammensetzung frei von einem monofunktionellen Acrylatmonomer/Methacrylatmonomer mit einem substituierten oder unsubstituierten linearen, d.h. nicht cyclischen, aliphatischen Kohlenwasserstoffrest.

In weiterer Ausgestaltung der Erfindung handelt es sich bei dem wenigstens einen Vinylmonomer mit einem substituierten oder unsubstituierten heterocyclischen Rest, wobei der heterocyclische Rest wenigstens ein ringbildendes Stickstoffatom aufweist, um wenigstens ein N-Vinylmonomer. Bevorzugt ist eine Vinylgruppe des wenigstens einen N-Vinylmonomers kovalent an ein ringbildendes Stickstoffatom des substituierten oder unsubstituierten heterocyclischen Rests gebunden.

Der substituierte oder unsubstituierte heterocyclische Rest des Vinylmonomers kann insbesondere 3 ringbildende Atome bis 8 ringbildende Atome aufweisen. Bevorzugt weist der substituierte oder unsubstituierte heterocyclische Rest des Vinylmonomers 5 ringbildende Atome bis 7 ringbildende Atome auf.

In weiterer Ausgestaltung der Erfindung handelt es sich bei dem substituierten oder unsubstituierten heterocyclischen Rest des Vinylmonomers um einen substituierten oder unsubstituierten Heterocycloarylrest, d.h. um einen substituierten oder unsubstituierten aromatischen heterocyclischen Rest. Vorzugsweise ist das Vinylmonomer mit einem substituierten oder unsubstituierten heterocyclischen Rest, wobei der heterocyclische Rest wenigstens ein ringbildendes Stickstoffatom aufweist, ausgewählt aus der Gruppe bestehend aus N-Vinylimidazol (1-Ethenyl-1H-imidazol), methyliertes N-Vinylimidazol und Mischungen von wenigstens zwei der genannten Vinylmonomere.

In weiterer Ausgestaltung der Erfindung handelt es sich bei dem substituierten oder unsubstituierten heterocyclischen Rest des Vinylmonomers um einen substituierten oder unsubstituierten Heterocycloalkylrest. Vorzugsweise ist das Vinylmonomer mit einem substituierten oder unsubstituierten heterocyclischen Rest, wobei der heterocyclische Rest wenigstens ein ringbildendes Stickstoffatom aufweist, ausgewählt aus der Gruppe bestehend aus Vinyl-Methyl-Oxazolidinon (5-Methyl-3-vinyl-2-oxazolidinon), Vinylpyrrolidon (N-Vinyl-2-pyrrolidon), N-Vinylcaprolactam (1-Vinylhexahydro-2*H*-azepin-2-on), N-Vinyl-2-Piperidon (N-Vinyl-ö-valerolactam), N-Vinylcaprolacton, und Mischungen von wenigstens zwei der genannten Vinylmonomere.

In weiterer Ausgestaltung der Erfindung ist das Vinylmonomer mit einem substituierten oder unsubstituierten heterocyclischen Rest, wobei der heterocyclische Rest wenigstens ein ringbildendes Stickstoffatom aufweist, ausgewählt aus der Gruppe bestehend aus Vinyl-Methyl-Oxazolidinon (5-Methyl-3-vinyl-2-oxazolidinon), Vinylpyrrolidon (N-Vinyl-2-pyrrolidon), N-Vinylcaprolactam (1-Vinylhexahydro-2H-azepin-2-on), N-Vinyl-2-Piperidon (N-Vinyl-δ-valerolactam), N-Vinylcaprolacton, N-Vinylimidazol (1-Ethenyl-1H-imidazol), methyliertes N-Vinylimidazol und Mischungen von wenigstens zwei der genannten Vinylmonomere.

Besonders bevorzugt handelt es sich bei dem Vinylmonomer mit einem substituierten oder unsubstituierten heterocyclischen Rest, wobei der heterocyclische Rest wenigstens ein ringbildendes Stickstoffatom aufweist, um Vinyl-Methyl-Oxazolidinon (5-Methyl-3-vinyl-2-oxazolidinon).

In weiterer Ausgestaltung der Erfindung weist das wenigstens eine Vinylmonomer mit einem substituierten oder unsubstituierten heterocyclischen Rest, wobei der heterocyclische Rest wenigstens ein ringbildendes Stickstoffatom aufweist, einen Anteil von 10 Gew.-% bis 50 Gew.-%, insbesondere 25 Gew.-% bis 40 Gew.-%, vorzugsweise 30 Gew.-% bis 40 Gew.-%, auf, bezogen auf das Gesamtgewicht der Zusammensetzung.

In weiterer Ausgestaltung der Erfindung handelt es sich bei dem bicyclischen, nichtaromatischen Kohlenwasserstoffrest um einen verbrückten Kohlenwasserstoffrest.

In weiterer Ausgestaltung der Erfindung ist das wenigstens eine monofunktionelle Acrylatmonomer/Methacrylatmonomer mit einem substituierten oder unsubstituierten bicyclischen, nichtaromatischen Kohlenwasserstoffrest ausgewählt aus der Gruppe bestehend aus Isobornylacrylat, Isobornylmethacrylat, Dihydrocyclopentadienylacrylat, ethoxyliertes Dihydrocyclopentadienylacrylat und Mischungen von wenigstens zwei der genannten monofunktionellen Acrylatmonomere/Methacrylatmonomere.

Vorzugsweise handelt es sich bei dem wenigstens einen monofunktionellen Acrylatmonomer mit einem substituierten oder unsubstituierten bicyclischen, nichtaromatischen Kohlenwasserstoffrest um Isobornylacrylat.

In weiterer Ausgestaltung der Erfindung weist das wenigstens eine monofunktionelle Acrylatmonomer/Methacrylatmonomer mit einem substituierten oder unsubstituierten bicyclischen, nichtaromatischen Kohlenwasserstoffrest einen Anteil von 5 Gew.-% bis 30 Gew.-%, insbesondere 10 Gew.-% bis 25 Gew.-%, vorzugsweise 15 Gew.-% bis 25 Gew.-%, auf, bezogen auf das Gesamtgewicht der Zusammensetzung.

Bevorzugt beträgt das Molmassenverhältnis des wenigstens einen Vinylmonomers mit einem substituierten oder unsubstituierten heterocyclischen Rest, wobei der heterocyclische Rest wenigstens ein ringbildendes Stickstoffatom aufweist, zu dem wenigstens einen monofunktionellen Acrylatmonomer/Methacrylatmonomer mit einem substituierten oder unsubstituierten bicyclischen, nichtaromatischen Kohlenwasserstoffrest > 1.

Vorzugsweise handelt es sich bei dem wenigstens einen Vinylmonomer mit einem substituierten oder unsubstituierten heterocyclischen Rest, wobei der heterocyclische Rest wenigstens ein ringbildendes Stickstoffatom aufweist, um Vinyl-Methyl-Oxazolidinon oder N-Vinylcaprolacton und bei dem wenigstens einen monofunktionellen Acrylatmonomer mit einem substituierten oder unsubstituierten bicyclischen, nichtaromatischen Kohlenwasserstoffrest um Isobornylacrylat.

Besonders bevorzugt liegt das Molverhältnis der Summe aus dem wenigstens einen Vinylmonomer mit einem substituierten oder unsubstituierten heterocyclischen Rest, wobei der heterocyclische Rest wenigstens ein ringbildendes Stickstoffatom aufweist, und dem wenigstens einen monofunktionellen Acrylatmonomer/Methacrylatmonomer mit einem substituierten oder unsubstituierten bicyclischen, nichtaromatischen Kohlenwasserstoffrest zu dem wenigstens einen monofunktionellen Acrylatmonomer/Methacrylatmonomer mit einem substituierten oder unsubstituierten monocycloaliphatischen Kohlenwasserstoffrest im Bereich von 1 bis 8, bevorzugt 1 bis 5, weiter bevorzugt 2 bis 4, insbesondere 3 bis 4. Die Vorteile der Erfindung kommen bei den in diesem Absatz offenbarten Molverhältnissen besonders stark zur Geltung.

Erfindungsgemäß kann es weiterhin bevorzugt sein, wenn die UV-härtbare Zusammensetzung ferner wenigstens ein N-Vinylmonomer aufweist, wobei das N-Vinylmonomer frei von einem heterocyclischen Rest ist. Bei dem N-Vinylmonomer kann es sich beispielsweise um N-Vinylformamid handeln.

In weiterer Ausgestaltung der Erfindung ist der wenigstens eine Photoinitiator vom Norrish-Typ I.

Unter dem Ausdruck "Photoinitiator vom Norrish-Typ I" soll im Sinne der vorliegenden Erfindung ein Photoinitiator verstanden werden, welcher insbesondere bei Einwirkung von ultravioletter Strahlung (UV-Strahlung) in zwei Radikale zerfällt, meist durch eine α-Spaltung. Die gebildeten Radikale können eine Kettenpolymerisation und/oder Vernetzung unter teilweiser oder vollständiger Aushärtung der Zusammensetzung auslösen.

Der wenigstens eine Photoinitiator ist vorzugsweise ausgewählt aus der Gruppe bestehend aus 2-Hydroxy-1-(4-[4-(2-hydroxy-2-methyl-propionyl)-benzyl]-phenyl)-2-methyl-propan-1-on, 1-Hyroxycyclohexyl-phenyl-keton, Phenylbis-2,4,6-trimethylbenzoyl-phosphinoxid, 2-Benzyl-2-dimethylamino-1-(4-morpholino-phenyl)-butanon-1, 2,4,6-Trimethylbenzoyl-diphenyl-phosphinoxid, 2-dimethylamino-2-(4-methyl-benzyl)-1-(4-morpholin-4-yl-phenyl)-butan-1-on, 2-Hydroxy-2-methyl-1-phenyl-propan-1-on, 2-Hydroxy-2-methylpropriophenon, 2,2-Dimethoxy-2-phenylacetophenon, 2-Methyl-1[4-(methylothio)phenyl]-2-morpholinopropan-1-on und Mischungen von wenigstens zwei der genannten Photoinitiatoren.

In weiterer Ausgestaltung der Erfindung weist der wenigstens eine Photoinitiator einen Anteil < 15 Gew.-%, insbesondere 1 Gew.-% bis 14 Gew.-%, auf, bezogen auf das Gesamtgewicht der Zusammensetzung. Wie bereits erwähnt, haben niedrige Photoinitiatoranteile, insbesondere wie in diesem Absatz beschrieben, den Vorteil, dass die UV-härtbare Zusammensetzung keinen oder geringeren gesundheitlichen Bedenken begegnet und insbesondere kostengünstig herstellbar ist.

Ferner kann die UV-härtbare Zusammensetzung wenigstens ein Farbmittel, insbesondere wenigstens ein Farbstoff und/oder wenigstens ein Pigment, vorzugsweise wenigstens ein Pigment, aufweisen. Mit anderen Worten kann es erfindungsgemäß bevorzugt sein, wenn es sich bei der UV-härtbaren Zusammensetzung um eine UV-härtbare Tinte oder UV-härtbare Tintenzusammensetzung handelt.

Das wenigstens eine Pigment kann insbesondere ausgewählt sein aus der Gruppe bestehend aus Titandioxid, Ruß, Aluminium, anorganische Pigmente, organische Pigmente und Mischungen von wenigstens zwei der genannten Pigmente.

Bevorzugt ist das wenigstens eine Pigment ein organisches Pigment, insbesondere ausgewählt aus der Gruppe bestehend aus Pigmente auf Basis von Quinacridonen, Pigmente auf Basis von Isoindolinen, Pigmente auf Basis von Isoindolinonen, Pigmente auf Basis von Phthalocyaninen, Pigmente auf Basis von Benzimidazolonen und Mischungen von wenigstens zwei der genannten Pigmente.

Weiterhin kann das wenigstens eine Farbmittel, vorzugsweise das wenigstens eine Pigment, einen Anteil von 0,1 Gew.-% bis 20 Gew.-%, insbesondere 0,3 Gew.-% bis 18 Gew.-%, vorzugsweise 1 Gew.-% bis 18 Gew.-%, aufweisen, bezogen auf das Gesamtgewicht der Zusammensetzung.

In weiterer Ausgestaltung der Erfindung ist die UV-härtbare Zusammensetzung farbstoff- und/oder pigmentfrei, insbesondere farbmittelfrei. Beispielsweise kann es sich bei der erfindungsgemäßen Zusammensetzung um eine UV-härtbare Zusammensetzung zur Herstellung einer sogenannten Deckschicht, d.h. eines Schlussbelags oder einer Endschicht (Finish) einer Beschichtung, wie beispielsweise einer Etikette, eines Aufklebers oder einer Direktdekoration, handeln.

Weiterhin kann die UV-härtbare Zusammensetzung ferner ein nicht-UV-reaktives Polymer aufweisen.

Unter dem Ausdruck "nicht-UV-reaktives Polymer" soll im Sinne der vorliegenden Erfindung ein Polymer verstanden werden, welches bei Einwirkung von ultravioletter Strahlung (UV-Strahlung) nicht vernetzbar ist.

Durch ein nicht-UV-reaktives Polymer kann in vorteilhafter Weise die Haftung der UV-härtbaren Zusammensetzung auf einem Substrat und/oder einer Substratoberfläche sowie die Blockfestigkeit zusätzlich verbessert werden.

Bevorzugt handelt es sich bei dem nicht-UV-reaktiven Polymer um ein Aldehyd- und/oder Keton- und/oder Polyesterharz.

Das nicht-UV-reaktive Polymer kann einen Anteil von 0,5 Gew.-% bis 5,0 Gew.-%, insbesondere 0,8 Gew.-% bis 5,0 Gew.-%, vorzugsweise 1,5 Gew.-% bis 5,0 Gew.-%, aufweisen, bezogen auf das Gesamtgewicht der Zusammensetzung.

In weiterer Ausgestaltung der Erfindung weist die UV-härtbare Zusammensetzung ferner ein Festharz, insbesondere ein teilacryliertes Festharz, auf. Bevorzugt weist die UV-härtbare Zusammensetzung eine Lösung des Festharzes in einem Acrylatmonomer, insbesondere in 2-Phenoxyethylacrylat oder Isobornylacrylat, auf.

Unter dem Ausdruck "teilacryliertes Festharz" soll im Sinne der vorliegenden Erfindung ein Festharz verstanden werden, welches teilweise mit Acrylgruppen funktionalisiert ist.

Durch ein teilacryliertes Festharz können mit besonderem Vorteil die Druckqualität durch verbesserte Tropfenbildung und die mechanischen Eigenschaften der ausgehärteten Zusammensetzung, wie beispielsweise Kratzfestigkeit und/oder Haftfestigkeit, zusätzlich verbessert werden.

Das teilacrylierte Festharz kann ausgewählt sein aus der Gruppe bestehend aus Aldehydharzen, Ketonharzen, Polyesterharzen und Mischungen von wenigstens zwei der genannten teilacrylierten Festharze.

Weiterhin kann das teilacrylierte Festharz einen Anteil von 1 Gew.-% bis 10 Gew.-%, insbesondere 3 Gew.-% bis 10 Gew.-%, vorzugsweise 5 Gew.-% bis 10 Gew.-%, aufweisen, bezogen auf das Gesamtgewicht der Zusammensetzung.

Die UV-härtbare Zusammensetzung kann weiterhin ferner wenigstens einen Zusatzstoff aufweisen, welcher ausgewählt ist aus der Gruppe bestehend aus mulitfunktionelles Acrylatmonomer, mulitfunktionelles Methacrylatmonomer, multifunktionelles Oligomer, Stabilisator, Netzmittel, Füllstoff, Verlaufsadditiv, Gleitmittel und Mischungen von wenigstens zwei der genannten Zusatzstoffe.

Unter dem Ausdruck "multifunktionelles Oligomer" soll im Sinne der vorliegenden Erfindung ein Oligomer verstanden werden, welches wenigstens zwei verschiedene funktionelle Gruppen aufweist.

Unter dem Ausdruck "Verlaufsadditiv" soll im Sinne der vorliegenden Erfindung ein Zusatzstoff verstanden werden, welcher dazu eingerichtet ist, Unebenheiten einer durch Aufbringen der erfindungsgemäßen Zusammensetzung auf eine Substratoberfläche erzeugten Schicht auszugleichen.

Das multifunktionelle Acrylatmonomer kann ausgewählt sein aus der Gruppe bestehend aus (Octahydro-4,7-methano-1H-indendiyl)bis(methylen)diacrylat, Tricyclodecandimethanoldiacrylat, Butandioldiacrylat, 1,2-Ethylenglykoldiacrylat, 1,12-Dodecanoldiacrylat, 1,10-Decandioldiacrylat, Esterdioldiacrylat, propoxyliertes 2-Neopentylglycoldiacrylat, Tris-(2-Hydroxyethyl)-isocyanurattriacrylat, propoxyliertes Neopentylglykoldiacrylat, Hexandioldiacrylat, Tripropylenglykoldiacrylat, Tetraethylenglycoldiacrylat, Dipropylenglykoldiacrylat, ethoxyliertes Bisphenol A-diacrylat, alkoxyliertes Hexandioldiacrylat, 3-Methyl-1,5-pentandioldiacrylat, alkoxyliertes Cyclohexandimethanoldiacrylat,Tricyclodecandimethanoldiacrylat, Trimethylolpropan-triacrylat, alkoxyliertes Trimethylolpropantriacrylat, ethoxyliertes Trimethylolpropantriacrylat, Glycerolpropoxylattriacrylat, Pentaerythritoltriacrylat, Dipentaerythritolpentaacrylat, Dipentaerythritolhexaacrylat, ethoxyliertes Pentaerythritoltetraacrylat, Pentaerythritoltetraacrylat, Ditrimethylolpropantetraacrylat, Polyethylenglycoldiacrylate und Mischungen von wenigstens zwei der genannten multifunktionelle Acrylatmonomere.

Das multifunktionelle Acrylatmonomer kann einen Anteil von 0,1 Gew.-% bis 2,0 Gew.-%, insbesondere 0,3 Gew.-% bis 2,0 Gew.-%, vorzugsweise 0,5 Gew.-% bis 2,0 Gew.-%, aufweisen, bezogen auf das Gesamtgewicht der Zusammensetzung.

Das multifunktionelle Methacrylatmonomer kann ausgewählt sein aus der Gruppe bestehend aus 1,12-Dodecanoldimethacrylat, Hexandioldimethacrylat, ethoxyliertes Bisphenol A-dimethacrylat, Trimethylolpropantrimethacrylat, Pentaerythritoltetramethacrylat und Mischungen von wenigstens zwei der genannten multifunktionelle Methacrylatmonomere.

Das multifunktionelle Methacrylatmonomer kann einen Anteil von 0,1 Gew.-% bis 5,0 Gew.-%, insbesondere 0,5 Gew.-% bis 5,0 Gew.-%, vorzugsweise 0,8 Gew.-% bis 5,0 Gew.-%, aufweisen, bezogen auf das Gesamtgewicht der Zusammensetzung.

Bevorzugt weisen das multifunktionelle Acrylatmonomer und das multifunktionelle Methacrylatmonomer zusammen einen Anteil < 15 Gew.-%, insbesondere 5 Gew.-% bis 10Gew.-%, vorzugsweise 1 Gew.-% bis 7 Gew.-%, auf, bezogen auf das Gesamtgewicht der Zusammensetzung.

Das multifunktionelle Oligomer kann ausgewählt sein aus der Gruppe bestehend aus Polyether, Acrylaten und Mischungen von wenigstens zwei der genannten multifunktionelle Oligomere.

Das multifunktionelle Oligomer kann einen Anteil von 0,5 Gew.-% bis 6,5 Gew.-%, insbesondere 0,8 Gew.-% bis 6,5 Gew.-%, vorzugsweise 1,0 Gew.-% bis 6,5 Gew.-%, aufweisen, bezogen auf das Gesamtgewicht der Zusammensetzung.

Ferner kann die UV-härtbare Zusammensetzung insbesondere frei von einem multifunktionellen Acrylatmonomer und/oder multifunktionellen Methacyrlatmonomer sein.

Ferner kann die UV-härtbare Zusammensetzung insbesondere frei von einem multifunktionellen Oligomer, insbesondere multifunktionellen Acrylatoligomer und/oder multifunktionellen Methacrylatoligomer, sein.

Ferner kann die UV-härtbare Zusammensetzung abgesehen von dem wenigstens einen monofunktionellen Acrylatmonomer/Methacrylatmonomer mit einem substituierten oder unsubstituierten monocykloaliphatischen Kohlenwasserstoffrest, dem wenigstens einen Vinylmonomer mit einem substituierten oder unsubstituierten heterocyclischen Rest, wobei der heterocyclische Rest wenigstens ein ringbildendes Stickstoffatom aufweist, und dem wenigstens einen monofunktionellen Acrylatmonomer/Methacrylatmonomer mit einem substituierten oder unsubstituierten bicyclischen, nichtaromatischen Kohlenwasserstoffrest insbesondere nur ein weiteres härtbares oder polymerisierbares Monomer, insbesondere nur ein weiteres Acrylatmonomer und/oder nur ein weiteres Methacrylatmonomer aufweisen, die/das Bestandteil einer Pigmentpaste sind/ist und/oder die/das ein Lösungsmittel für ein Festharz, insbesondere teilacryliertes Festharz, sind/ist, insbesondere wie in der bisherigen Beschreibung erwähnt, wobei das Festharz vorzugsweise ein Bestandteil der UV-härtbaren Zusammensetzung ist.

Ferner kann die UV-härtbare Zusammensetzung insbesondere aus dem wenigstens einen monofunktionellen Acrylatmonomer/Methacrylatmonomer mit einem substituierten oder unsubstituierten monocycloaliphatischen Kohlenwasserstoffrest, dem wenigstens einen Vinylmonomer mit einem substituierten oder unsubstituierten heterocyclischen Rest, wobei der heterocyclische Rest wenigstens ein ringbildendes Stickstoffatom aufweist, dem wenigstens einen monofunktionellen Acrylatmonomer/Methacrylatmonomer mit einem substituierten oder unsubstituierten bicyclischen, nichtaromatischen Kohlenwasserstoffrest, dem wenigstens einen Photoinitiator und wahlweise aus wenigstens einem weiteren Bestandteil bestehen, wobei der wenigstens eine weitere Bestandteil ausgewählt ist aus der Gruppe bestehend aus wenigstens ein Farbmittel, wenigstens ein Farbstoff, wenigstens ein Pigment, ein nicht-UV-reaktives Polymer, ein Festharz, insbesondere ein teilacryliertes Festharz, ein multifunktionelles Acrylatmonomer, ein multifunktionelles Methacrylatmonomer, ein multifunktionelles Oligomer, insbesondere ein multifunktionelles Acyrlatoligmer und/oder ein multifunktionelles Methacrylatoligomer, ein Stabilisator, ein Netzmittel, ein Füllstoff, ein Verlaufsadditiv, ein Gleitmittel und Mischungen von wenigstens zwei der genannten weiteren Bestandteile. Bezüglich der vorgenannten weiteren Bestandteile wird vollständig auf die bisherige Beschreibung Bezug genommen.

Ferner kann die UV-härtbare Zusammensetzung abgesehen von dem wenigstens einen monofunktionellen Acrylatmonomer/Methacrylatmonomer mit einem substituierten oder unsubstituierten monocycloaliphatischen Kohlenwasserstoffrest, dem wenigstens einen Vinylmonomer mit einem substituierten oder unsubstituierten heterocyclischen Rest, wobei der heterocyclische Rest wenigstens ein ringbildendes Stickstoffatom aufweist, sowie dem wenigstens einen multifunktionellen Acrylatmonomer/Methacrylatmonomer mit einem substituierten oder unsubstituierten bicyclischen, nichtaromatischen Kohlenwasserstoffrest insbesondere keine weiteren härtbaren oder polymerisierbaren Monomere, insbesondere keine weiteren Acrylatmonomere und/oder keine weiteren Methacrylatmonomere, aufweisen.

Gemäß einem zweiten Aspekt betrifft die Erfindung ein Verfahren zum Beschichten oder Bedrucken, insbesondere Digitalbedrucken, eines Substrats und/oder einer Substratoberfläche, wobei das Verfahren die folgenden Schritte aufweist:
- Beschichten oder Bedrucken, insbesondere Digitalbedrucken, eines Substrats und/oder einer Substratoberfläche mit einer UV-härtbaren Zusammensetzung gemäß erstem Erfindungsaspekt und
- UV-Härten der UV-härtbaren Zusammensetzung.

Bevorzugt werden/wird das Substrat und/oder die Substratoberfläche mittels eines Digitaldruckverfahrens, insbesondere Tintenstrahldruckverfahrens, mit der UV-härtbaren Zusammensetzung bedruckt.

Unter dem Ausdruck "Digitaldruckverfahren" soll im Sinne der vorliegenden Erfindung ein Druckverfahren verstanden werden, bei welchem das Druckbild direkt von einem Computer in eine Druckmaschine übertragen wird, ohne dass eine statische oder feste Druckform benutzt wird.

Unter dem Ausdruck "Tintenstrahldruckverfahren" soll im Sinne der vorliegenden Erfindung ein Verfahren verstanden werden, bei welchem kleine Tröpfchen flüssiger Tinte erzeugt und auf ein Substrat und/oder eine Substratoberfläche aufgebracht werden. Dabei gibt es zum einen die Möglichkeit, einen kontinuierlichen Tintenstrahl zu erzeugen (Continuous Ink Jet, CIJ), oder zum anderen die Möglichkeit der diskontinuierlichen Erzeugung einzelner Tropfen, welche nur bei Bedarf erzeugt und auf das Substrat übertragen werden (Drop-on-Demand, DOD).

Das Substrat und/oder die Substratoberfläche kann grundsätzlich nur teilweise oder vollständig, d.h. vollflächig, mit der UV-härtbaren Zusammensetzung beschichtet bzw. bedruckt werden.

Bezüglich weiterer Merkmale und Vorteile des Verfahrens wird zur Vermeidung von Wiederholungen vollständig auf die im Rahmen des ersten Erfindungsaspekts gemachten Ausführungen Bezug genommen. Die dort insbesondere in Bezug auf die UV-härtbare Zusammensetzung beschriebenen Merkmale und Vorteile gelten sinngemäß auch für das Verfahren gemäß zweitem Erfindungsaspekt.

Gemäß einem dritten Aspekt betrifft die Erfindung ein Kit, insbesondere in Form eines Tintensatzes, zum Beschichten oder Bedrucken, insbesondere Digitalbedrucken, eines Substrats und/oder einer Substratoberfläche.

Das Kit weist räumlich voneinander getrennt
- wenigstens zwei voneinander unterscheidbare UV-härtbare Zusammensetzungen gemäß erstem Erfindungsaspekt, insbesondere wenigstens zwei voneinander unterscheidbare farbmittelhaltige, bevorzugt pigmenthaltige, UV-härtbare Zusammensetzungen gemäß erstem Erfindungsaspekt,
   und/oder
- wenigstens eine UV-härtbare Zusammensetzung gemäß erstem Erfindungsaspekt, insbesondere wenigstens eine farbmittelhaltige, bevorzugt pigmenthaltige, UV-härtbare Zusammensetzung gemäß erstem Erfindungsaspekt, und eine nicht UV-härtbare Zusammensetzung,
   und/oder
- wenigstens eine UV-härtbare Zusammensetzungen gemäß erstem Erfindungsaspekt insbesondere wenigstens eine farbmittelhaltige, bevorzugt pigmenthaltige, UV-härtbare Zusammensetzung gemäß erstem Erfindungsaspekt, und wenigstens eine weitere Komponente, ausgewählt aus der Gruppe bestehend aus UV-Lampe, LED-Strahler, LED-UV-Trocknereinheit, Digitaldruckkopf, Digitaldruckanlage, Pigmentdispersionen und Kombinationen von wenigstens zwei der genannten Komponenten, auf.

Bevorzugt unterscheiden sich die wenigstens zwei voneinander unterscheidbaren UV-härtbaren Zusammensetzungen gemäß erstem Erfindungsaspekt in Bezug auf ein bzw. das Farbmittel, insbesondere in Bezug auf ein bzw. das Pigment.

Bei der UV-Lampe kann es sich beispielsweise um einen Quecksilberstrahler handeln.

Bei dem Digitaldruckkopf kann es sich beispielsweise um einen Tintenstrahldruckkopf handeln.

Bei der Digitaldruckanlage kann es sich beispielsweise um eine Tintenstrahldruckanlage handeln.

Bei den Pigmentdispersionen kann es sich beispielsweise um Pigmentdispersionen zur Herstellung einer weißen, farbigen, metallischen oder farblosen Tinte handeln.

Insbesondere kann es sich bei den Pigmentdispersionen um Titandioxid enthaltende Dispersionen, rußhaltige Dispersionen, aluminiumhaltige Dispersionen, anorganische Pigmentdispersionen, organische Pigmentdispersionen oder um Mischungen von wenigstens zwei der genannten Pigmentdispersionen handeln.

Bezüglich weiterer Merkmale und Vorteile des Kits wird zur Vermeidung von Wiederholungen vollständig auf die bisherige Beschreibung, insbesondere auf die im Rahmen des ersten Erfindungsaspekts gemachten Ausführungen, Bezug genommen. Die dort insbesondere in Bezug auf die UV-härtbare Zusammensetzung beschriebenen Merkmale und Vorteile gelten sinngemäß auch für das Kit gemäß drittem Erfindungsaspekt.

Gemäß einem vierten Aspekt betrifft die Erfindung ein Substrat, welches mit einer UV-härbaren Zusammensetzung gemäß erstem Erfindungsaspekt beschichtet oder bedruckt, insbesondere digital bedruckt, ist.

Bei dem Substrat kann es sich um ein plattenförmig gestaltetes Substrat, d.h. um eine Platte, handeln.

Das Substrat kann insbesondere ein Material aufweisen oder aus einem Material bestehen, welches ausgewählt ist aus der Gruppe bestehend aus Kunststoff, Keramik und Glas. Bevorzugt handelt es sich bei dem Substrat um ein Substrat, welches einen Kunststoff aufweist oder aus einem Kunststoff besteht. Der Kunststoff ist vorzugsweise ausgewählt aus der Gruppe bestehend aus Polyvinylchlorid, Polymethylmethacrylat, Polypropylen, Polyethylen, Acrylnitril-Butadien-Styrol-Copolymer, Polystyrol, Polyamid, Copolymere von wenigstens zwei der genannten Materialien und Blends, d.h. Mischungen, von wenigstens zwei der genannten Materialien.

Bezüglich weiterer Merkmale und Vorteile des Substrats wird zur Vermeidung von Wiederholungen ebenfalls vollständig auf die bisherige Beschreibung, insbesondere auf die im Rahmen des ersten Erfindungsaspekts gemachten Ausführungen, Bezug genommen. Die dort insbesondere in Bezug auf die UV-härtbare Zusammensetzung beschriebenen Merkmale und Vorteile gelten sinngemäß auch für das Substrat gemäß viertem Erfindungsaspekt.

Weitere Merkmale und Vorteile der Erfindung ergeben sich aus der nachfolgenden Beschreibung von bevorzugten Ausführungsformen in Form von Beispielen. Dabei können einzelne Merkmale jeweils für sich alleine oder in Kombination miteinander verwirklicht sein. Die nachfolgend beschriebenen Beispiele dienen lediglich der weiteren Erläuterung der Erfindung, ohne die Erfindung auf den Offenbarungsgehalt der Beispiele zu beschränken.

### BEISPIELTEIL

Verglichen wurden Proben der Tinten, die mit einer 12µm-Rakel auf PP-Stegplattenmaterial aufgetragen wurden. Die Härtung erfolgte mit einem UV-Bandtrockner der Firma IST, Modell M-20-2x1-TR-CMK-SLC bei 366nm und 120W/cm, Bandgeschwindigkeit 20m/min.

Der Vergleich von Rakelabzügen eliminiert gegenüber Drucktests Einflüsse von Maschine und Software und führte zu nachfolgenden Ergebnissen.

### Auswertung:

Verblocken (Zusammenkleben nach Stapeln): Proben von 10 x 10 cm wurden unmittelbar nach der UV-Härtung 12 Stunden lang gestapelt und mit einem Zusatzgewicht von 4 kg belastet. Die Proben durften danach nicht aneinander haften.

Haftung: nach ISO240 Gitterschnitt mit Tesafilmtest. GT0 = keine Beschädigung, GT5 = vollständige Ablösung.

### Beispiel einer erfindungsgemäßen UV-härtbaren Zusammensetzung:

Bei der erfindungsgemäßen Zusammensetzung handelte es sich um eine pigmenthaltige UV-härtbare Zusammensetzung (Tinte) mit den nachfolgenden Bestandteilen (in Gew.-%):

| | |
|---|---|
| I BOA¹⁾ | 24,2% |
| VMox¹⁾ | 33,0% |
| TBCH¹⁾ | 19,1% |
| Verlaufsadditiv | 0,1% |
| Stabilisator | 0,1% |
| Photoinitiator Norish I | 11,5% |
| Rokracure 7250⁵⁾ | 4,5% |
| UV-Cyan Paste³⁾ | 7,5% |

Es zeigte sich, dass die Haftung der Zusammensetzung sehr gut war. Bei Härtung mit 20m/min - 40m/min zeigte sich sowohl auf einem Substrat aus Polypropylen als auch auf einem Substrat aus Hart-Polyvinylchlorid ein Gitterschnitt-Kennwert von 0 (GT0; sehr gute Haftfestigkeit). Der Gitterschnittkennwert auf PMMA war 1.

### Beispiel einer nicht erfindungsgemäßen UV-härtbaren Zusammensetzung:

Bei der nicht erfindungsgemäßen Zusammensetzung handelte es sich um eine pigmenthaltige UV-härtbare Zusammensetzung (Tinte) mit den nachfolgenden Bestandteilen (in Gew.-%):

| | |
|---|---|
| IBOA¹⁾ | 28,2% |
| ACMO¹⁾ | 33,0% |
| CTFA¹⁾ | 15,1% |
| Verlaufsadditiv | 0,1% |
| Stabilisator | 0,1% |
| Photoinitiator Norish I | 11,5% |
| Rokracure 7250⁵⁾ | 4,5% |
| UV-Cyan Paste³⁾ | 7,5% |

Es zeigte sich, dass die Haftung der Zusammensetzung schlecht war. Bei Härtung mit 20m/min - 40m/min zeigte sich auf einem Substrat aus Polypropylen ein Gitterschnitt-Kennwert von 4 (GT0: sehr gute Haftfestigkeit, GT5: keine Haftung).

### Legende:

¹⁾ Monofunktionelle Acrylatmonomere/Methacrylatmonomere
   - IBOA:: Isobornylacrylat
   - ACMO:: N-Acryloylmorpholin
   - TBCH:: 4-tert.-Butylcyclohexylacrylat
   - TMCHA:: 3,3,5-Trimethylcyclohexylacrylat
   - VMox:: Vinyl-Methyl-Oxazolidinon
   - CTFA:: Cyclisches Trimethylolpropanformalacrylat
²⁾ Mehrfachfunktionelle Monomere
   hier in diesem Bsp. difunktionelle Monomere
³⁾ Im Markt erhältliche Pigmentpasten mit einem monofunktionellen Acrylatmonomeranteil von 30-70%.
⁴⁾ Amin Verbindung (Synergist)
⁵⁾ Teilacryliertes Festharz in monofunktionellem Monomer gelöst
⁶⁾ Trifunktionelle Monomere
z.B. Ethoxyliertes (3) Trimethylolpropan Triacrylat

Aliphatic Urethane Diacrylate 30% in monfunktionellen Monomer

## Patentansprüche

1. UV-härtbare Zusammensetzung zum Beschichten oder Bedrucken, insbesondere Digitalbedrucken, eines Substrats und/oder einer Substratoberfläche, aufweisend
- wenigstens ein monofunktionelles Acrylatmonomer/Methacrylatmonomer mit einem substituierten oder unsubstituierten monocycloaliphatischen Kohlenwasserstoffrest,
- wenigstens ein Vinylmonomer mit einem substituierten oder unsubstituierten heterocyclischen Rest, wobei der heterocyclische Rest wenigstens ein ringbildendes Stickstoffatom aufweist,
- wenigstens ein monofunktionelles Acrylatmonomer/Methacrylatmonomer mit einem substituierten oder unsubstituierten bicyclischen, nichtaromatischen Kohlenwasserstoffrest und
- wenigstens einen Photoinitiator,
wobei die UV-härtbare Zusammensetzung frei von wenigstens einem monofunktionellen Acrylatmonomer/Methacrylatmonomer mit einem substituierten oder unsubstituierten heterocyclischen, nichtaromatischen Rest ist.

2. UV-härtbare Zusammensetzung nach Anspruch 1, **dadurch gekennzeichnet, dass** es sich bei dem monocycloaliphatischen Kohlenwasserstoffrest um einen Monocycloalkylrest, insbesondere mit 3 ringbildenden Kohlenstoffatomen bis 8 ringbildenden Kohlenstoffatomen, handelt.

3. UV-härtbare Zusammensetzung nach Anspruch 1 oder 2, **dadurch gekennzeichnet, dass** das wenigstens eine monofunktionelle Acrylatmonomer/Methacrylatmonomer mit einem substituierten oder unsubstituierten monocycloaliphatischen Kohlenwasserstoffrest ausgewählt ist aus der Gruppe bestehend aus 3,3,5-Trimethylcyclohexylacrylat, 2-(1,1-Dimethylethyl)cyclohexylacrylat, 3-(1,1-Dimethylethyl)cyclohexylacrylat, 4-(1,1-Dimethylethyl)cyclohexylacrylat, 4-tert.-Butylcyclohexylacrylat, 4-tert.-Butylcyclohexylmethacrylat, Cyclohexylmethacrylat, 3,3,5-Trimethylcyclohexylmethacrylat und Mischungen von wenigstens zwei der genannten monofunktionellen Acrylatmonomere/Methacrylatmonomere.

4. UV-härtbare Zusammensetzung nach einem der vorhergehenden Ansprüche, **dadurch gekennzeichnet, dass**
- das wenigstens eine monofunktionelle Acrylatmonomer/Methacrylatmonomer mit einem substituierten oder unsubstituierten monocycloaliphatischen Kohlenwasserstoffrest einen Anteil von 5 Gew.-% bis 30 Gew.-%, insbesondere 10 Gew.-% bis 25 Gew.-%, vorzugsweise 15 Gew.-% bis 25 Gew.-%,
und/oder
- das wenigstens eine Vinylmonomer mit einem substituierten oder unsubstituierten heterocyclischen Rest einen Anteil von 10 Gew.-% bis 50 Gew.-%, insbesondere 25 Gew.-% bis 40 Gew.-%, vorzugsweise 30 Gew.-% bis 40 Gew.-%,
und/oder
- das wenigstens eine monofunktionelle Acrylatmonomer/Methacrylatmonomer mit einem substituierten oder unsubstituierten bicyclischen, nichtaromatischen Kohlenwasserstoffrest einen Anteil von 5 Gew.-% bis 30 Gew.-%, insbesondere 10 Gew.-% bis 25 Gew.-%, vorzugsweise 15 Gew.-% bis 25 Gew.-%,
und/oder
- der wenigstens eine Photoinitiator einen Anteil < 15 Gew.-%, insbesondere 1 Gew.-% bis 14 Gew.-%, aufweist, bezogen auf das Gesamtgewicht der Zusammensetzung.

5. UV-härtbare Zusammensetzung nach einem der vorhergehenden Ansprüche, **dadurch gekennzeichnet, dass** die UV-härtbare Zusammensetzung frei von einem monofunktionellen Acrylatmonomer/Methacrylatmonomer mit einem substituierten oder unsubstituierten linearen aliphatischen Kohlenwasserstoffrest ist.

6. UV-härtbare Zusammensetzung nach einem der vorhergehenden Ansprüche, **dadurch gekennzeichnet, dass** es sich bei dem wenigstens einen Vinylmonomer mit einem substituierten oder unsubstituierten heterocyclischen Rest um wenigstens ein N-Vinylmonomer handelt.

7. UV-härtbare Zusammensetzung nach einem der vorhergehenden Ansprüche, **dadurch gekennzeichnet, dass** es sich bei dem substituierten oder unsubstituierten heterocyclischen Rest des Vinylmonomers um einen substituierten oder unsubstituierten Heterocycloarylrest handelt.

8. UV-härtbare Zusammensetzung nach einem der Ansprüche 1 bis 6, **dadurch gekennzeichnet, dass** es sich bei dem substituierten oder unsubstituierten heterocyclischen Rest des Vinylmonomers um einen substituierten oder unsubstituierten Heterocycloalkylrest handelt.

9. UV-härtbare Zusammensetzung nach einem der vorhergehenden Ansprüche, **dadurch gekennzeichnet, dass** das wenigstens eine Vinylmonomer mit einem substituierten oder unsubstituierten heterocyclischen Rest ausgewählt ist aus der Gruppe bestehend aus Vinyl-Methyl-Oxazolidinon, Vinylpyrrolidon, N-Vinylcaprolactam, N-Vinyl-2-Piperidon, N-Vinylcaprolacton, N-Vinylimidazol, methyliertes N-Vinylimidazol und Mischungen von wenigstens zwei der genannten Vinylmonomere.

10. UV-härtbare Zusammensetzung nach einem der vorhergehenden Ansprüche, **dadurch gekennzeichnet, dass** es sich bei dem bicyclischen, nichtaromatischen Kohlenwasserstoffrest um einen verbrückten Kohlenwasserstoffrest handelt.

11. UV-härtbare Zusammensetzung nach einem der vorhergehenden Ansprüche, **dadurch gekennzeichnet, dass** das wenigstens eine monofunktionelle Acrylatmonomer/Methacrylatmonomer mit einem substituierten oder unsubstituierten bicyclischen, nichtaromatischen Kohlenwasserstoffrest ausgewählt ist aus der Gruppe bestehend aus Isobornylacrylat, Isobornylmethacrylat, Dihydrocyclopentadienylacrylat, ethoxyliertes Dihydrocyclopentadienylacrylat und Mischungen von wenigstens zwei der genannten monofunktionellen Acrylatmonomere/Methacrylatmonomere.

12. UV-härtbare Zusammensetzung nach einem der vorhergehenden Ansprüche, **dadurch gekennzeichnet, dass** der wenigstens eine Photoinitiator vom Norrish Typ I ist, insbesondere ausgewählt aus der Gruppe bestehend aus 2-Hydroxy-1-(4-[4-(2-hydroxy-2-methyl-propionyl)-benzyl]-phenyl)-2-methyl-propan-1-on, 1-Hyroxycyclohexyl-phenylketon, Phenylbis-2,4,6-trimethylbenzoyl-phosphinoxid, 2-Benzyl-2-dimethylamino-1-(4-morpholino-phenyl)-butanon-1, 2,4,6-Trimethylbenzoyl-diphenyl-phosphinoxid, 2-dimethylamino-2-(4-methyl-benzyl)-1-(4-morpholin-4-yl-phenyl)-butan-1-on, 2-Hydroxy-2-methyl-1-phenyl-propan-1-on, 2-Hydroxy-2-methylpropriophenon, 2,2-Dimethoxy-2-phenylacetophenon, 2-Methyl-1[4-(methylothio)phenyl]-2-morpholinopropan-1-on und Mischungen von wenigstens zwei der genannten Photoinitiatoren.

13. Verfahren zum Beschichten oder Bedrucken, insbesondere Digitalbedrucken, eines Substrats und/oder einer Substratoberfläche, aufweisend die folgenden Schritte:
- Beschichten oder Bedrucken, insbesondere Digitalbedrucken, einer Substratoberfläche mit einer UV-härtbaren Zusammensetzung nach einem der vorhergehenden Ansprüche und
- UV-Härten der Zusammensetzung.

14. Kit zum Beschichten oder Bedrucken, insbesondere Digitalbedrucken, eines Substrats und/oder einer Substratoberfläche, aufweisend räumlich voneinander getrennt
- wenigstens zwei voneinander unterscheidbare UV-härtbare Zusammensetzungen nach einem der Ansprüche 1 bis 12
und/oder
- wenigstens eine UV-härtbare Zusammensetzung nach einem der Ansprüche 1 bis 12 und eine nicht UV-härtbare Zusammensetzung
und/oder
- wenigstens eine UV-härtbare Zusammensetzungen nach einem der Ansprüche 1 bis 12 und wenigstens eine weitere Komponente, ausgewählt aus der Gruppe bestehend aus UV-Lampe, LED-Strahler, LED-UV-Trocknereinheit, Digitaldruckkopf, Digitaldruckanlage, Pigmentdispersionen und Kombinationen von wenigstens zwei der genannten Komponenten.

15. Substrat, beschichtet oder bedruckt mit einer UV-härtbaren Zusammensetzung nach einem der Ansprüche 1 bis 12.
